# EUROPÄISCHE PATENTSCHRIFT

(11) **EP 4 125 192 B1**
(45) Veröffentlichungstag und Bekanntmachung des Hinweises auf die Patenterteilung: **02.10.2024**
(21) Anmeldenummer: 21306052.8
(22) Anmeldetag: 28.07.2021
(51) Int. Cl.: H02K 11/20, B65G 54/02, H02K 41/03, H02K 16/02

(54) **LINEARMOTORSYSTEM, LÄUFER UND BETRIEBSVERFAHREN FÜR EIN SOLCHES**
LINEAR MOTOR SYSTEM AND OPERATING METHOD FOR SAME
SYSTÈME DE MOTEUR LINÉAIRE, PALIER ET PROCÉDÉ DE FONCTIONNEMENT D'UN TEL SYSTÈME

(43) Veröffentlichungstag der Anmeldung: 01.02.2023
(73) Patentinhaber: Schneider Electric Industries SAS, 92500 Rueil-Malmaison (FR)
(72) Erfinder: KLÖTZLE, Tobias, 77971 Kippenheim (DE)
(74) Vertreter: Manitz Finsterwald Patent- und Rechtsanwaltspartnerschaft mbB

(56) Entgegenhaltungen:
- EP-A1- 3 569 528
- US-A1- 2015 028 098
- US-A1- 2018 086 565
- US-A1- 2020 028 427

## Beschreibung

Die vorliegende Erfindung betrifft ein Linearmotorsystem, insbesondere ein Transportsystem, z.B. einen Multicarrier, umfassend: wenigstens einen Läufer, eine Führungsbahn für den Läufer, eine Führung, welche den Läufer in einer Bewegungsrichtung entlang der Führungsbahn führt, wobei der Läufer von entlang der Führungsbahn angeordneten Magneten mittels einer Magnetkraft an der Führungsbahn gehalten wird.

Die Erfindung betrifft auch einen Läufer für ein Linearmotorsystem sowie ein Verfahren zum Betreiben eines Linearmotorsystems.

Linearmotorsysteme sind heute weit verbreitet. Sie können zum Beispiel dazu eingesetzt werden, Produkte in Industrieanlagen zu bewegen, insbesondere zu transportieren. Zum flexiblen Transport von verschiedensten Produkten sind Multicarrier besonders vorteilhaft. Diese umfassen insbesondere eine Mehrzahl an Läufern, also Transporteinheiten, die einzeln und unabhängig voneinander bewegbar sind. In einem typischen Multicarrier-System ist die Führungsbahn in sich geschlossen, also praktisch endlos, was einen Umlaufbetrieb ermöglicht. Es existieren aber beispielsweise auch "offene" Systeme, also Systeme ohne Umlaufbetrieb und mit definierten Bahnenden.

Ein Linearmotorsystem der eingangs genannten Art kann beispielsweise eine Sicherungseinrichtung umfassen, welche den Läufer an der Führungsbahn bei Ausfall oder Überwindung der Magnetkraft sichert. Die Sicherungseinrichtung weist typischerweise an der Führungsbahn eine Sicherungsschiene und an dem Läufer ein Sicherungselement auf.

Bei Systemen mit mehreren Läufern ist es in vielen Anwendungsfällen nötig oder vorteilhaft, die einzelnen Läufer automatisch identifizieren zu können. Eine Identifizierung eines Läufers kann zum Beispiel wünschenswert sein, wenn ein Läufer im abgeschalteten oder stromlosen Zustand des Systems hinzugefügt oder entfernt wird. Gleiches gilt für den Fall, dass ein Läufer während des abgeschalteten Zustands zum Beispiel von Hand bewegt wird. Bei weiteren Anwendungsbeispielen weisen mehrere Läufer einen unterschiedlichen Aufbau, eine unterschiedliche Ausstattung, wie etwa unterschiedliche Werkzeuge, und/oder eine unterschiedliche zu transportierende Last auf. Bei einem besonderen Anwendungsbeispiel wird ein Produkt zwischen zwei Läufern gehalten und von diesen bewegt. Hierbei ist ebenfalls wünschenswert, die das Produkt haltenden Läufer mit einfachen Mitteln identifizieren zu können.

Ferner ermöglicht eine Identifizierung der Läufer eine Aufzeichnung von Prozessdaten für den jeweiligen Läufer, etwa einen kumulierten Bewegungsweg. Dies eröffnet vorteilhafte Möglichkeiten der vorausschauenden Wartung.

US 2020/028427 A1 offenbart ein Linearmotorsystem mit einer Vielzahl von Transportmitteln, welche ein zusätzliches Hilfsführungselement umfassen, welches ein rollender und/oder gleitender Körper ist. US 2015/028098 A1 offenbart ein Positionserfassungssystem, das ein maschinenlesbares Medium aufweist, das an einer Erweiterung eines Läufers angebracht ist. EP 3 569 528 A1 offenbart ein Multi-Carrier-System mit Transportelementen, welche entlang einer Führungsbahn bewegt werden, wobei auf einer Oberseite der Transportelemente ein Ausleger angeordnet ist.

Vor diesem Hintergrund ist es ein übergeordnetes Ziel der Erfindung, einen Läufer an einer Führungsbahn sichern und identifizieren zu können.

Im Rahmen dieses übergeordneten Ziels ist es eine Aufgabe der Erfindung, einen einfach und/oder kompakt aufgebauten Läufer für ein Linearmotorsystem sowie ein Linearmotorsystem mit einem entsprechenden Läufer und ein Verfahren zum Betreiben eines entsprechenden Linearmotorsystems bereitzustellen.

Diese Aufgabe wird durch einen Läufer gemäß Anspruch 1, ein Linearmotorsystem gemäß Anspruch 2 und durch ein Verfahren gemäß Anspruch 14 gelöst, und konkret dadurch, dass an dem Sicherungselement ein Identifikationsmerkmal zur Identifikation des Läufers vorgesehen ist.

Dadurch, dass das Identifikationsmerkmal an dem Sicherungselement vorgesehen ist, welches häufig ohnehin zur Sicherung des Läufers an der Führungsbahn nötig ist, muss kein zusätzliches Bauteil am Läufer angeordnet oder befestigt werden. Dies spart den für ein sonst zusätzliches Bauteil nötigen Bauraum ein. Außerdem sind Montage und Aufbau des Läufers somit besonders einfach.

Das Linearmotorsystem kann bevorzugt mehrere Läufer umfassen, wobei wenigstens zwei Läufer unterschiedlich ausgebildete Identifikationsmerkmale aufweisen. Das Identifikationsmerkmal kann insbesondere unmittelbar an dem Sicherungselement vorgesehen sein oder von dem Sicherungselement getragen sein. Beispielsweise kann das Identifikationsmerkmal einteilig an dem Sicherungselement vorgesehen sein.

Generell kann das Identifikationsmerkmal beispielsweise eine Identifikationsinformation kodieren. Verschiedene beispielhafte Ausführungsformen umfassen, dass die Identifikationsinformation kodiert ist durch wenigstens eines von: physische Form, Material, Oberflächeneigenschaft und/oder -gestaltung, Magnetisierung, und/oder elektromagnetisches und/oder optisches Signal, zu dessen Ausgabe das Identifikationsmerkmal eingerichtet ist. Es sind auch Kombinationen der genannten Kodierungsarten möglich.

Als physische Form kann beispielsweise die Größe des Sicherungselements, insbesondere seine Länge, Breite und/oder Höhe, eine Identifikationsinformation kodieren. Alternativ oder zusätzlich können beispielsweise an dem Sicherungselement vorgesehene Zähne und Freistellen zwischen den Zähnen eine Identifikationsinformation kodieren. Allgemeiner kann eine Identifikationsinformation dadurch kodiert sein, dass an vorbestimmten Stellen eine Freistelle oder eine geschlossene Stelle vorgesehen ist, wie es z.B. bei einer Lochkarte der Fall ist.

Unterschiedliche Materialien können ebenfalls charakteristisch für verschiedene Läufer sein. Die Materialen können beispielsweise mittels kapazitiver und/oder induktiver Sensoren ermittelt werden.

Eine beispielhafte Oberflächeneigenschaft zur Kodierung der Identifikationsinformation ist Farbe. So können unterschiedliche Farben für unterschiedliche Läufer charakteristisch sein. Die Oberfläche kann auch durch unterschiedliche Farbarrangements charakteristisch gestaltet sein.

Eine Oberflächengestaltung kann beispielsweise einen Barcode, einen QR-Code und/oder einen sonstigen sichtbaren Code umfassen. Die Oberflächengestaltung kann beispielsweise mittels eines Aufklebers angebracht sein. Alternativ kann die Oberflächengestaltung beispielsweise aufgedruckt sein. Möglich ist beispielsweise auch eine Farbmanipulation oder Gravur der Oberfläche, zum Beispiel mittels Laser. Es kann sich grundsätzlich um die Oberfläche des Sicherungselements selbst oder eines zusätzlichen Bauteils handeln.

Die Magnetisierung kann sich bei verschiedenen Läufern beispielsweise in einer Magnetfeldstärke, eine Magnetfeldrichtung und/oder auch eine Magnetfeldform unterscheiden. Es können beispielsweise auch Stellen vorbestimmt sein, an denen ein Magnet einen Wert 1 kodiert und ein nicht vorhandener Magnet einen Wert 0, oder umgekehrt. Die Magnetisierung lässt sich vorteilhaft mittels Hall-Sensoren oder Reed-Schaltern ermitteln.

Als Beispiel für ein Identifikationsmerkmal, welches ein elektromagnetisches Signal aussendet, wird ein RFID-Tag angeführt.

Ein Identifikationsmerkmal, welches ein optisches Signal aussendet, kann beispielsweise als Infratotsender ausgebildet sein.

Grundsätzlich umfasst das Identifikationsmerkmal insbesondere einen maschinenlesbaren Code. Das Identifikationsmerkmal kann eine Identifikationsinformation beispielsweise binär kodieren.

Gemäß einer Weiterbildung ist vorgesehen, dass das Sicherungselement und/oder die Sicherungsschiene, die Sicherungsschiene insbesondere abschnittsweise, zwischen einer Sicherungsstellung und einer Freigabestellung bewegbar ist. Dies eröffnet eine einfache Möglichkeit, den Läufer von der Führungsbahn abzunehmen, wenn sich das Sicherungselement bzw. die Sicherungsschiene in der Freigabestellung befindet. Beispielsweise kann ein Läufer auch auf einfache Weise dem Linearmotorsystem hinzugefügt werden. Anschließend wird das Sicherungselement bzw. die Sicherungsschiene in die Sicherungsstellung bewegt.

Insbesondere bei der vorstehend beschriebenen Weiterbildung, bei der das Sicherungselement zwischen einer Sicherungsstellung und einer Freigabestellung bewegbar ist, ergibt sich die nachfolgend beschriebene, besonders vorteilhafte Möglichkeit. So kann das Identifikationsmerkmal am Sicherungselement derart angeordnet werden, dass das Identifikationsmerkmal durch den Sensor zumindest im Wesentlichen nur für den Fall erkennbar ist, dass sich das Sicherungselement in der Sicherungsstellung befindet. Hierdurch lässt sich ohne zusätzliche Sensorik ermitteln, ob sich das Sicherungselement in der Sicherungsstellung befindet. Somit wird die Betriebssicherheit deutlich erhöht. Im negativen Fall, d.h. wenn kein Identifikationsmerkmal erkannt wurde, obwohl eine Positionserfassungseinrichtung angibt, dass sich ein Läufer bei dem Sensor befindet, kann eine Fehlermeldung ausgegeben werden. Hierdurch wird der Bediener veranlasst, den Läufer und die Stellung des Sicherungselement zu überprüfen.

Bevorzugterweise kann es vorgesehen sein, dass sich das Sicherungselement und die Sicherungsschiene im Normalbetrieb nicht berühren. So kann auf einfache Weise sichergestellt werden, dass im Normalbetrieb allein die Führung, welche typischerweise auf minimale Reibung und hohe Präzision optimiert ist, eine definierte Bewegung des Läufers führt. Wenn hingegen die Magnetkraft, mittels derer der Läufer an der Führungsbahn gehalten wird, ausfällt oder überwunden wird, kann der Läufer von der Sicherungsschiene über das Sicherungselement an der Führungsbahn gehalten werden. Dabei berühren sich typischerweise das Sicherungselement und die Sicherungsschiene oder greifen ineinander.

Grundsätzlich kann sich die Sicherungsschiene bevorzugt entlang der gesamten Führungsbahn erstrecken und z.B. an der Führungsbahn befestigt sein. Hierdurch kann auf einfache Weise die Sicherung der Läufer über den gesamten Bewegungsweg sichergestellt werden. Die Sicherungsschiene kann bevorzugt eine Öffnung definieren, in welche das Sicherungselement, bevorzugt nur, in der Sicherungsstellung hineinragt. Beispielsweise kann die Öffnung abgewandt von der Führungsbahn ausgebildet sein.

Es ist auch möglich, dass sich die Sicherungsschiene lediglich über einen Teilbereich der Führungsbahn erstreckt. Bei diesem Teilbereich kann es sich beispielsweise um einen solchen handeln, bei dem die Gefahr für eine Überwindung der Magnetkraft besonders hoch ist, beispielsweise um einen Kurvenbereich.

In einem beispielhaften Bezugssystem können Raumrichtungen wie folgt definiert sein: Eine x-Richtung entspricht einer von der Führung definierten Bewegungsrichtung und/oder eine y-Richtung ist parallel zu der Magnetkraft, mittels derer der Läufer an der Führungsbahn gehalten wird, und/oder eine z-Richtung ist senkrecht zu der Magnetkraft und/oder senkrecht zu der von der Führung definierten Bewegungsrichtung. Dieses Bezugssystem kann allgemeingültig sein und nachfolgend beschriebene Ausführungsformen, welche sich auf das Bezugssystem beziehen, können unabhängig voneinander oder in Kombination miteinander vorgesehen sein. Rückbezüge in den Ansprüchen sind insoweit nicht einschränkend zu verstehen.

Einige vorteilhafte Ausführungsformen umfassen, dass das Sicherungselement zwischen der Sicherungsstellung und der Freigabestellung in einer xy-, yz- oder xz-Ebene bewegbar ist.

Beispielsweise kann es vorgesehen sein, dass das Sicherungselement und/oder die Sicherungsschiene zwischen der Sicherungsstellung und der Freigabestellung um eine Achse drehbar oder entlang einer Achse verschiebbar ist. Dies ermöglicht einfache konstruktive Ausgestaltungen. Die Achse, um welche das Sicherungselement drehbar bzw. entlang welcher das Sicherungselement verschiebbar ist, kann beispielsweise parallel zur x-, y,- oder z-Richtung sein.

Mit Vorteil kann es vorgesehen sein, dass das Sicherungselement die Sicherungsschiene hintergreift, bevorzugt in y-Richtung und/oder in z-Richtung.

Grundsätzlich kann das Linearmotorsystem bevorzugt mehrere Läufer jeweils mit einem Sicherungselement und einem daran angeordneten Identifikationsmerkmal umfassen. Die Identifikationsmerkmale der Läufer weisen insbesondere jeweils unterschiedliche Identifikationsinformationen auf. Es kann also grundsätzlich eine weitgehend beliebige Zahl an Läufern anhand ihrer jeweiligen Identifikationsmerkmale eindeutig identifizierbar sein.

Für manche Anwendungen ist es allerdings lediglich erforderlich, nur eine Teilmenge der Läufer, insbesondere lediglich einen Läufer anhand eines Identifikationsmerkmals eindeutig identifizieren zu können. Beispielsweise können die weiteren Läufer identifiziert werden, weil deren Reihenfolge an der Führungsbahn bekannt ist. Somit kann es grundsätzlich ausreichend sein, zwei unterschiedliche Identifikationsmerkmale vorzusehen. Dies gilt allerdings vor allem für Fälle, in denen keine Läufer hinzugefügt oder entfernt werden.

Der Sensor kann grundsätzlich zur Ausgabe eines digitalen und/oder analogen Signals ausgebildet sein. Anhand des Signals kann eine Steuereinrichtung des Linearmotorsystems den betreffenden Läufer identifizieren.

Gemäß einem Ausführungsbeispiel ist der Sensor an der Führungsbahn vorgesehen. Ein besonders einfacher und kompakter Aufbau ergibt sich, wenn der Sensor an der Sicherungsschiene vorgesehen ist. Der Sensor kann beispielsweise unmittelbar an der Sicherungsschiene befestigt oder von der Sicherungsschiene getragen sein.

Vorteilhafte Ausführungsformen umfassen, dass der Sensor ein mechanischer, kapazitiver, induktiver, optischer, oder akustischer Sensor, ein Magnetsensor oder eine Signalempfangseinheit für ein elektromagnetisches und/oder optisches Signal ist. Auch Kombinationen dieser Sensorprinzipien sind möglich.

Der Sensor kann vorteilhafter Weise zur berührungslosen Erkennung des Identifikationsmerkmals ausgebildet sein. Somit wird der Läufer in seiner Bewegung nicht durch die Erfassung des Identifikationsmerkmals mittels des Sensors beeinträchtigt.

Grundsätzlich können ein oder mehrere Sensoren und im Fall mehrerer Sensoren gleichartige oder unterschiedliche Sensoren vorgesehen sein. An der Führungsbahn kann also grundsätzlich ein einziger oder mehr als ein Sensor zur Erkennung des Identifikationsmerkmals vorgesehen ist. Ein einziger Sensor ermöglicht einen einfachen Aufbau und trotzdem eine zuverlässige Identifikation. Mehrere Sensoren ermöglichen eine schnellere Identifizierung, insbesondere in großen Systemen.

Zur Identifikation kann der Läufer zu dem wenigstens einen Sensor bewegt werden. Wenn mehrere Sensoren vorgesehen sind, kann der Läufer beispielsweise zum nächstgelegenen Sensor oder einem in einer vorbestimmten Richtung nächsten Sensor bewegt werden.

Eine konstruktiv relativ aufwändige aber im Hinblick auf die Identifikation besonders vorteilhafte Lösung sieht vor, dass an der Führungsbahn, insbesondere an der Sicherungsschiene, eine Vielzahl von Sensoren derart verteilt angeordnet ist, dass eine Identifikation der Läufer an jeder Position in Bezug auf die Führungsbahn zumindest im Wesentlichen ohne (längere) Bewegung der Läufer möglich ist.

Die Erfindung umfasst auch einen Läufer für ein Linearmotorsystem gemäß dem hierauf gerichteten, unabhängigen Anspruch. Der Läufer kann insbesondere für ein Transportsystem, z.B. Multicarrier, und/oder für ein Linearmotorsystem nach vorstehend beschriebener Art ausgebildet sein. Der erfindungsgemäße Läufer umfasst einen Magneten zum Halten des Läufers mittels einer Magnetkraft an einer Führungsbahn und ein Sicherungselement zur Sicherung des Läufers bei Ausfall oder Überwindung der Magnetkraft, wobei an dem Sicherungselement ein Identifikationsmerkmal zur Identifikation des Läufers vorgesehen ist.

Die Erfindung umfasst auch ein Set von zumindest zwei Läufern der oben beschriebenen Art, wobei die Identifikationsmerkmale der verschiedenen Läufer unterschiedlich sind.

Ferner betrifft die Erfindung ein Verfahren gemäß dem hierauf gerichteten Anspruch. Dieses Verfahren dient dem Betreiben eines Linearmotorsystems nach vorstehend beschriebener Art und umfasst, dass der Läufer anhand des Identifikationsmerkmals identifiziert wird.

Eine Ausführungsform sieht vor, dass das Linearmotorsystem eine Mehrzahl an Läufern jeweils mit einem Identifikationsmerkmal umfasst, wobei der Betrieb des Linearmotorsystems, insbesondere nach einer Betriebsunterbrechung, aufgenommen wird, wobei die Aufnahme des Betriebs umfasst, dass die Läufer anhand ihrer Identifikationsmerkmale identifiziert werden.

Gemäß einer Weiterbildung ist vorgesehen, dass mittels einer Positionserfassungseinrichtung Positionen ermittelt werden, an denen sich Läufer befinden, wobei die Läufer anschließend auf Basis der ermittelten Positionen zwecks Identifizierung mittels eines Antriebs zu dem Sensor bewegt werden und durch den Sensor anhand ihrer Identifikationsmerkmale identifiziert werden.

Grundsätzlich kann das Linearmotorsystem insbesondere eine Mehrzahl an Elektromagneten umfassen, welche entlang der Führungsbahn verteilt angeordnet und zum Bewegen des Läufers ansteuerbar sind. Die Elektromagneten können insbesondere mit einem am Läufer vorgesehenen Permanentmagneten zum Bewegen des Läufers zusammenwirken. Ein Permanentmagnet am Läufer kann beispielsweise sowohl zum Halten des Läufers an der Führungsbahn als auch zum Antreiben seiner Bewegung vorgesehen sein. Auf Seiten der Führungsbahn kann das Halten des Läufers beispielsweise durch die Elektromagneten bewirkt werden.

Alternativ oder zusätzlich können Permanentmagneten an der Führungsbahn vorgesehen sein, mittels derer der Läufer an der Führungsbahn gehalten wird.

Der Schutzbereich wird durch die Ansprüche bestimmt.

Die Erfindung wird nachfolgend lediglich beispielhaft anhand der schematischen Zeichnungen erläutert.
- Fig. 1: zeigt ein als Transportsystem ausgebildetes Linearmotorsystem.
- Fig. 2: zeigt einen Kurvenabschnitt des Transportsystems der Fig. 1.
- Fig. 3: zeigt einen Querschnitt des Transportsystems der Fig. 1 mit Schnittebene senkrecht zu einer Führungsbahn.
- Fig. 4: zeigt ein vereinfachtes Schema eines Läufers an einer Führungsbahn.
- Fig. 5: illustriert eine Bewegung eines Sicherungselements zwischen einer Sicherungsstellung und einer Freigabestellung.
- Fig. 6: zeigt ein weiteres vereinfachtes Schema eines Läufers an einer Führungsbahn.
- Fig. 7: illustriert eine Bewegung eines Sicherungselements zwischen einer Sicherungsstellung und einer Freigabestellung.
- Fig. 8 bis 10: zeigen weitere Ausführungsformen von Sicherungseinrichtungen.
- Fig. 11 und 12: zeigen Sicherungselemente mit verschiedenen Ausführungsformen von Identifikationsmerkmalen.

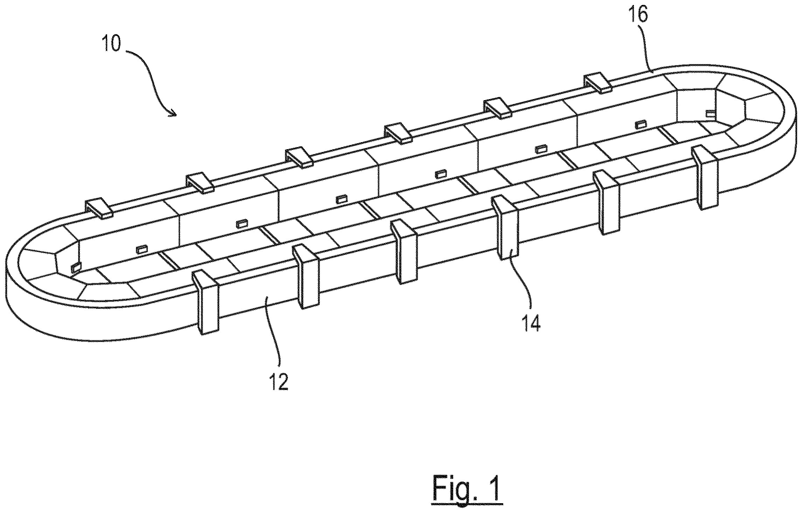

Ein Transportsystem 10, das als Multi-Carrier-System ausgebildet ist, ist in Fig. 1 dargestellt. Das Transportsystem 10 umfasst mehrere, als Linearmotoren ausgebildete Segmente 12, die aneinandergereiht angeordnet sind und von denen aus Gründen der Übersichtlichkeit hier nur zwei referenziert sind. Das Transportsystem 10 umfasst außerdem mehrere Läufer 14. Die Segmente 12 bilden gemeinsam eine Führungsbahn 16, entlang derer die Läufer 14 geführt bewegbar sind, insbesondere unabhängig voneinander.

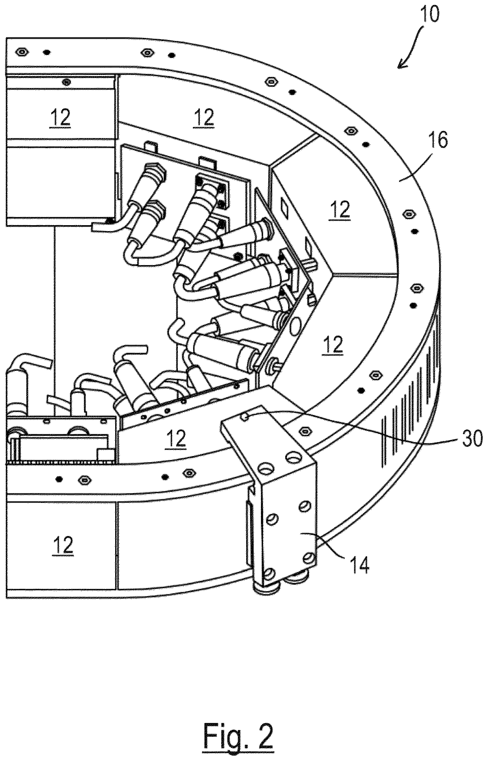

Fig. 2 zeigt einen Kurvenabschnitt des Transportsystems 10 in vergrößerter Ansicht. Hier ist lediglich einer der in Fig. 1 mehreren Läufer 14 dargestellt. Der Läufer 14 ist entlang der Führungsbahn 16 bewegbar, nämlich über die Linearmotoren der Segmente 12. Auf der dem Läufer 14 abgewandten Seite der Führungsbahn 16, also innerhalb der Kurve, sind verschiedene elektronische Einrichtungen, insbesondere Anschlüsse, zur Ansteuerung der Linearmotoren 12 sichtbar.

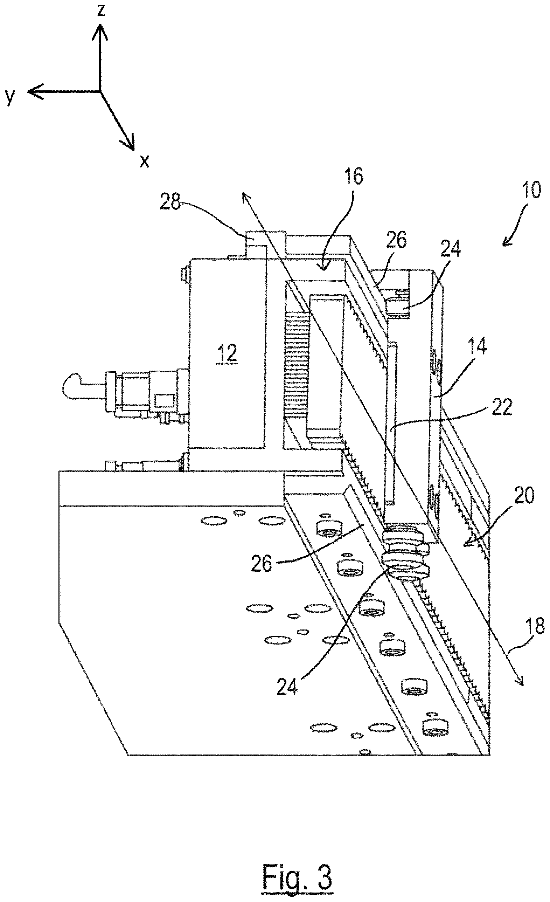

In Fig. 3 ist das Transportsystem 10 geschnitten und vergrößert dargestellt. Es ist ein Läufer 14 sichtbar, der an der Führungsbahn 16 beweglich geführt ist. Dabei ist der Läufer 14 entlang einer Führungsachse 18 oder Bewegungsrichtung bewegbar. Zu einer Bewegung entlang der Führungsachse 18 wird der Läufer 14 durch eine Vielzahl von Elektromagneten 20 angesteuert, die an der Führungsbahn 16 angeordnet und entlang dieser gleichmäßig verteilt sind. Die Elektromagneten 20 wirken dabei mit einem am Läufer 14 angeordneten Permanentmagneten 22, der auch als Antriebsmagnet bezeichnet werden kann, zum Antrieb des Läufers 14 entlang der Führungsachse 18 zusammen.

Der Läufer 14 ist an der Führungsbahn 16 mechanisch geführt, hier durch eine Rollenführung. Der Läufer 14 umfasst Führungselemente 24, welche als Führungsrollen ausgebildet sind. Die Führungsbahn 16 umfasst Führungsschienen 26. Der Läufer 14 wird dabei über den Permanentmagneten 22 an der Führungsbahn 16 gehalten.

Das Transportsystem 10 umfasst außerdem eine Positionserfassungseinrichtung 28. Diese kann zum Beispiel als Reihe von einer Vielzahl von Magnetsensoren ausgebildet sein, die sich entlang der Führungsbahn 16 erstreckt. Am Läufer 14 kann zum Beispiel ein Permanentmagnet 30 vorgesehen sein, der auch als Positionsmagnet bezeichnet werden kann und in Fig. 2 sichtbar ist.

Das Transportsystem 10 umfasst ferner eine nicht separat dargestellte Steuerungseinrichtung, die dazu eingerichtet ist, die Elektromagneten 20 gezielt anzusteuern, um den Läufer 14 entlang der Führungsbahn 16 bzw. der Führungsachse 18 zu bewegen. Die Positionserfassungseinrichtung 28 führt dabei eine Positionsinformation betreffend die Position des Läufers 14 in Bezug auf die Führungsachse 18 zurück zur Steuerungseinrichtung. Die Steuerungseinrichtung regelt die Bewegung des Läufers 14 auf Basis der Positionsinformation.

In Fig. 3 ist ein Koordinatensystem mit x-, y-, und z-Richtungen eingezeichnet. Die x-Richtung verläuft parallel zur Führungsachse 18 und entspricht der Bewegungsrichtung des Läufers 14 entlang der Führungsbahn 16. Die Position des Läufers 14 an der Führungsbahn 16 bezieht sich typischerweise auf die x-Richtung. Die y-Richtung verläuft senkrecht zur x-Richtung und parallel zu einem Abstand zwischen den Magneten 20 und 22. Damit ist die y-Richtung parallel zu der Richtung, in der der Permanentmagnet 22 an den Elektromagneten 20 angezogen wird, also parallel zur Magnetkraft, mittels derer der Läufer 14 an der Führungsbahn 16 gehalten wird. Die z-Richtung verläuft senkrecht zur x-Richtung und zur y-Richtung.

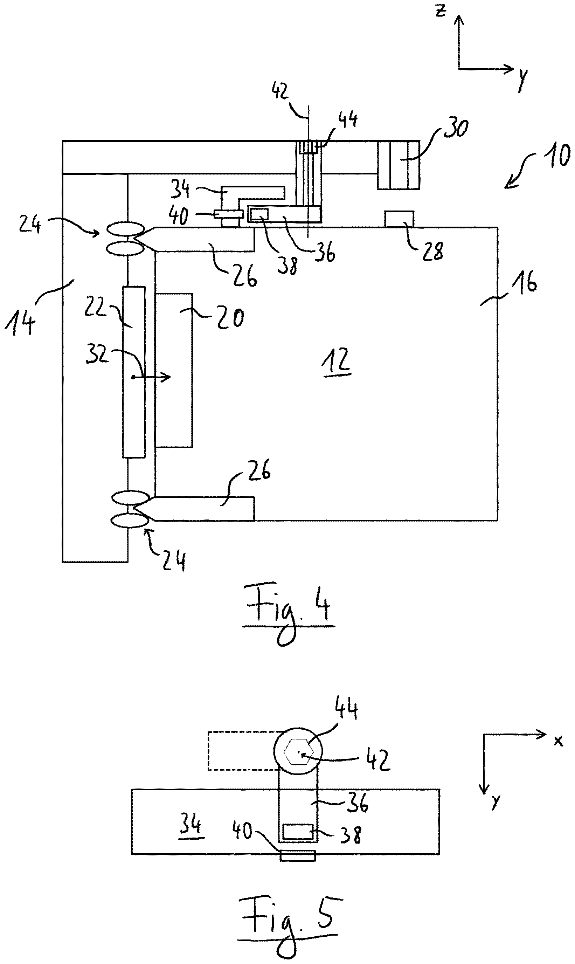

In Fig. 4 ist ein Linearmotorsystem 10 mit einem Läufer 14 und einer Führungsbahn 16 in einer Schnittansicht gezeigt. Die Schnittebene verläuft dabei senkrecht zur Bewegungsrichtung des Läufers 14. Das hier und in den weiteren Figuren eingezeichnete Koordinatensystem entspricht grundsätzlich dem mit Bezug auf Fig. 3 beschriebenen Koordinatensystem. Die Schnittebene der Schnittansicht der Fig. 4 liegt also in der yz-Ebene.

Die Bezugszeichen sind entsprechend denjenigen der Fig. 1 bis 3 vergeben und im Hinblick auf die Funktion der betreffenden Elemente kann grundsätzlich auf die obigen Ausführungen verwiesen werden. Vielmehr werden nachfolgend lediglich ausgewählte Besonderheiten hervorgehoben.

Der Permanentmagnet 22 wird an der Führungsbahn 16 über eine Magnetkraft 32 gehalten, die in Fig. 4 angedeutet ist. Die Magnetkraft 32 ist parallel zur y-Richtung. Die Magnetkraft 32 zieht den Permanentmagneten 22 und damit den Läufer 14 in y-Richtung an die Führungsbahn 16 an. Die Führung für den Läufer 14, welche in diesem Beispiel Führungsrollen 24 und Führungsschienen 26 umfasst, bildet dabei ein Gegenlager in y-Richtung.

Es kann in unerwünschten Betriebssituationen vorkommen, dass die Magnetkraft 32 überwunden wird. Dies kann etwa durch eine zu hohe Geschwindigkeit bei einer Kurvenfahrt hervorgerufen werden. Auch kann etwa eine schadhafte oder verschmutzte Führung dazu führen, dass der Abstand zwischen den Magneten 20 und 22 kurzzeitig vergrößert wird. Da allerdings die Magnetkraft 32 abhängig von diesem Abstand ist, kann dies zu einer Überwindung der Magnetkraft 32 führen. Da der Permanentmagnet 22 von einem Elektromagneten 20 mit der Magnetkraft 32 angezogen wird, ist außerdem ein Ausfall der Magnetkraft 32 oder ein Wegfall eines großen Teiles der Magnetkraft 32 möglich, beispielsweise bei einem Defekt eines der Linearmotoren.

Um zu gewährleisten, dass der Läufer 14 in den vorstehend beschriebenen, unerwünschten Betriebssituationen nicht einfach herunterfällt, ist eine Sicherungseinrichtung vorgesehen, welche den Läufer 14 an der Führungsbahn 16 sichert. Die Sicherungseinrichtung umfasst an der Führungsbahn 16 eine Sicherungsschiene 34 und an dem Läufer 14 ein Sicherungselement 36.

Das Sicherungselement 36 hintergreift die Sicherungsschiene 34 sowohl in y-Richtung als auch in z-Richtung. Bei Ausfall oder Überwindung der Magnetkraft 32 greift das Sicherungselement 36 mit der Sicherungsschiene 34 ein und hält den Läufer 34 an der Führungsbahn 16. Ansonsten berühren sich das Sicherungselement 36 und die Sicherungsschiene 34 nicht.

An dem Sicherungselement 36 ist ein Identifikationsmerkmal 38 zur Identifikation des Läufers 14 vorgesehen. Auf Seiten der Führungsbahn 16 ist ein Sensor 40 zur Erkennung des Identifikationsmerkmals vorgesehen. Der Sensor 40 ist in dieser Ausführungsform an der Sicherungsschiene 34 angeordnet. Das Identifikationsmerkmal 38 kodiert auf hier nicht näher dargestellte Weise eine Identifikationsinformation, anhand derer der Läufer 14 in einem System mit mehreren Läufern identifizierbar ist.

Das Sicherungselement 36 ist zwischen einer Sicherungsstellung und einer Freigabestellung bewegbar, wie es nachfolgend anhand von Fig. 4 in Verbindung mit Fig. 5 illustriert wird. Fig. 5 zeigt dabei eine weiter vereinfachte Darstellung des Sicherungselements 36 und der Sicherungsschiene 34, wobei die Blickrichtung des Betrachters parallel zur in Fig. 4 angedeuteten z-Richtung verläuft.

Fig. 4 zeigt das Sicherungselement 36 in der Sicherungsstellung. In Fig. 5 ist die Sicherungsstellung durch die Volllinie angedeutet, die Freigabestellung hingegen durch die Strichlinie. Das Sicherungselement 36 ist um eine Achse 42 drehbar, die parallel zur z-Richtungen ist.

In der Freigabestellung ist die z-Richtung freigegeben, sodass der Läufer 14 von der Führungsbahn 16 abgenommen werden kann, wenn sich das Sicherungselement 36 in der Freigabestellung befindet. Umgekehrt kann ein Läufer 14 auf die Führungsbahn 16 aufgesetzt werden, wenn sich das Sicherungselement 36 in der Freigabestellung befindet. In der Sicherungsstellung ist der Läufer 16 hingegen an der Führungsbahn 16 gesichert.

Um das Sicherungselement 36 zwischen der Sicherungsstellung und der Freigabestellung auf einfache Weise bewegen zu können, ist eine Antriebsschnittstelle 44 vorgesehen. Die Antriebschnittstelle 44 dient dem Eingriff eines Werkzeugs und ist hier beispielhaft als Innensechskant ausgeführt. Anstelle oder zusätzlich zu einer Antriebschnittstelle 44 kann beispielsweise auch ein Griff oder ein Hebel zur direkten händischen Betätigung vorgesehen sein.

Wie es insbesondere aus Fig. 5 ersichtlich ist, ist das Identifikationsmerkmal 38 nahe bei dem Sensor 40 angeordnet, wenn sich das Sicherungselement 36 in der Sicherungsstellung befindet. Dies gilt, wenn - wie in Fig. 5 der Fall - sich der Läufer 14 bei dem Sensor 40 und nicht an einer anderen x-Position befindet. Wenn sich das Sicherungselement 36 hingegen in der Freigabestellung befindet, ist das Identifikationsmerkmal 38 relativ weit vom Sensor 40 entfernt. Bei entsprechender Ausgestaltung des Identifikationsmerkmals 38 und des Sensors 40 ist das Identifikationsmerkmal derart angeordnet, dass es durch den Sensor 40 nur für den Fall erkennbar ist, dass sich das Sicherungselement 38 in der Sicherungsstellung befindet. Wenn kein Identifikationsmerkmal 38 erkannt wird, obwohl sich der Läufer 14 bei dem Sensor 40 befindet, kann eine Fehlermeldung ausgegeben werden, die darauf hindeuten kann, dass sich das Sicherungselement 36 nicht in der Sicherungsstellung befindet.

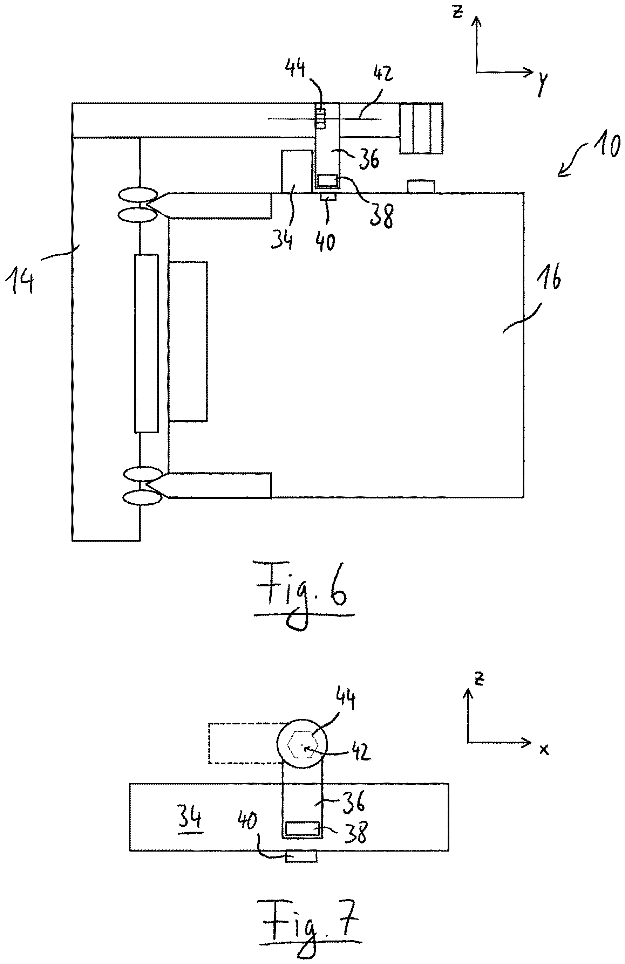

Das Linearmotorsystem 10 der Fig. 6 ist grundsätzlich ähnlich zu demjenigen der Fig. 4 aufgebaut. Allerdings ist in Fig. 6 die Sicherungseinrichtung anders aufgebaut.

Die Sicherungseinrichtung der Fig. 6 umfasst ebenfalls eine Sicherungsschiene 34 an der Führungsbahn 16 und ein Sicherungselement 36 an dem Läufer 14. Das Sicherungselement 36 hintergreift die Sicherungsschiene 34 hier lediglich in y-Richtung. Das Sicherungselement 36 ist außerdem um eine Achse 42 drehbar, welche parallel zur y-Richtung ist. Als weitere Besonderheit im Vergleich zu Fig. 4 ist hervorzuheben, dass der Sensor 40 zur Erkennung des Identifikationsmerkmals 38 an der Führungsbahn 16 aber nicht an der Sicherungsschiene 34 angeordnet ist.

In Fig. 7 ist wiederum eine weiter vereinfachte Darstellung von Sicherungsschiene 34 und Sicherungselement 36 gezeigt, welche derjenigen der Fig. 5 ähnelt. Fig. 7 illustriert die Bewegung des Sicherungselements 36 der Fig. 6 zwischen der Sicherungsstellung, welche als Volllinie dargestellt ist, und der Freigabestellung, welche in Fig. 7 gestrichelt dargestellt ist. Anders als Fig. 5 zeigt Fig. 7 die xz-Ebene, da das Sicherungselement 36 hier um eine Achse 42 drehbar ist, welche parallel zur y-Richtung ist.

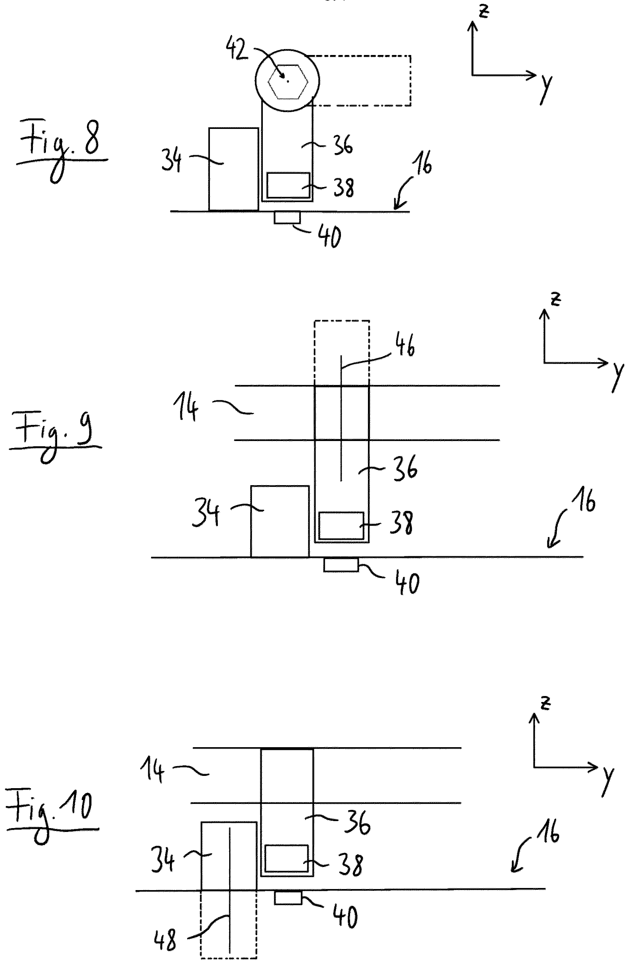

Die Fig. 8 bis 10 illustrieren weitere Ausführungsformen von Sicherungseinrichtungen. Dabei sind jeweils eine Sicherungsstellung als Volllinie dargestellt und eine Freigabestellung gestrichelt angedeutet.

In Fig. 8 ist das Sicherungselement 36 um eine Achse 42 drehbar, die parallel zur x-Richtung ist.

Fig. 9 zeigt eine Ausführungsform, bei der das Sicherungselement 36 zwischen einer Sicherungsstellung und einer Freigabestellung verschiebbar ist, nämlich entlang einer Achse 46. Die Achse 46 ist parallel zur z-Richtung.

In Fig. 10 ist eine Sicherungseinrichtung gezeigt, bei der die Sicherungsschiene 34, insbesondere ein Abschnitt derselben, zwischen einer Sicherungsstellung, welche als Volllinie dargestellt ist, und einer Freigabestellung, welche gestrichelt angedeutet ist, bewegbar ist. Dabei ist die Sicherungsschiene 34 entlang einer dargestellten Achse 48 verschiebbar. Die Achse 48 ist parallel zur z-Richtung.

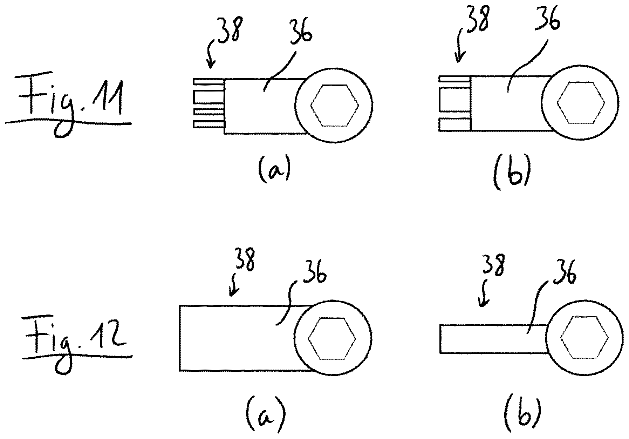

Die Fig. 11 und 12 zeigen Sicherungselemente 36, die grundsätzlich ähnlich den vorstehend beschriebenen Sicherungselementen 36 aufgebaut sind. Dabei illustrieren die Fig. 11 und 12 jeweils Identifikationsmerkmale 38, welche eine Identifikationsinformation mittels einer physischen Form kodieren. Es zeigen jeweils eine Teildarstellung (a) eine physische Form, welche eine erste Identifikationsinformation kodiert, und eine Teildarstellung (b) eine physische Form, welche eine zweite Identifikationsinformation kodiert.

In Fig. 11 umfasst das Identifikationsmerkmal 38 eine Mehrzahl an Zähnen und zwischen den Zähnen liegenden Freistellen. Die Zähne und Freistellen kodieren die Identifikationsinformation und können beispielsweise durch einen Lichtschranken-Sensor oder einen kapazitiven Sensor ermittelt werden. Die Kodierung kann insbesondere binär sein. So kann ein Zahn an einer vorgegebenen Stelle einen Wert 1 darstellen und eine Freistelle an der vorgegebenen Stelle einen Wert 0, oder umgekehrt.

In Fig. 12 kodiert das Identifikationsmerkmal 38 die Identifikationsinformation durch die physische Größe des Sicherungselement 36, hier konkret durch die Breite. Die physische Größe des Sicherungselements 36 kann ebenfalls beispielsweise mittels eines Lichtschranken-Sensors oder eines kapazitiven Sensors ermittelt werden.

### Bezugszeichenliste

- 10: Transportsystem/Linearmotorsystem
- 12: Linearmotor
- 14: Läufer
- 16: Führungsbahn
- 18: Führungsachse
- 20: Elektromagnet
- 22: Antriebsmagnet
- 24: Führungsrollen
- 26: Führungsschiene
- 28: Positionserfassungseinrichtung
- 30: Positionsmagnet
- 32: Magnetkraft
- 34: Sicherungsschiene
- 36: Sicherungselement
- 38: Identifikationsmerkmal
- 40: Sensor
- 42: Achse
- 44: Antriebschnittstelle
- 46: Achse
- 48: Achse

## Patentansprüche

1. Läufer (14) für ein Linearmotorsystem (10), insbesondere Transportsystem, z.B. Multicarrier:
wobei der Läufer (14) einen Magneten (22) zum Halten des Läufers (14) mittels einer Magnetkraft (32) an einer Führungsbahn (16) und
ein Sicherungselement (16) zur Sicherung des Läufers (14) bei Ausfall oder Überwindung der Magnetkraft (32) umfasst,
**dadurch gekennzeichnet, dass** an dem Sicherungselement (36) ein Identifikationsmerkmal (38) zur Identifikation des Läufers (14) vorgesehen ist.

2. Linearmotorsystem (10), insbesondere Transportsystem, z.B. Multicarrier, mit einem Läufer nach Anspruch 1, umfassend:
wenigstens den Läufer (14),
eine Führungsbahn (16) für den Läufer (14),
eine Führung, welche den Läufer (14) in einer Bewegungsrichtung entlang der Führungsbahn (16) führt, wobei der Läufer (14) von entlang der Führungsbahn (16) angeordneten Magneten (20) mittels einer Magnetkraft (32) an der Führungsbahn (16) gehalten wird, und
eine Sicherungseinrichtung, welche den Läufer (14) an der Führungsbahn (16) bei Ausfall oder Überwindung der Magnetkraft (32) sichert,
wobei die Sicherungseinrichtung an der Führungsbahn (16) eine Sicherungsschiene (34) und an dem Läufer (14) das Sicherungselement (36) aufweist,
wobei das Linearmotorsystem (10) einen Sensor (40) zur Erkennung des Identifikationsmerkmals (38) aufweist.

3. Linearmotorsystem (10) nach Anspruch 2,
wobei das Identifikationsmerkmal (38) eine Identifikationsinformation kodiert, nämlich durch wenigstens eines von:
physische Form,
Material,
Oberflächeneigenschaft und/oder -gestaltung,
Magnetisierung, und/oder
elektromagnetisches und/oder optisches Signal, zu dessen Ausgabe das Identifikationsmerkmal eingerichtet ist.

4. Linearmotorsystem (10) nach Anspruch 2 oder 3,
wobei das Sicherungselement (36) und/oder die Sicherungsschiene (34) zwischen einer Sicherungsstellung und einer Freigabestellung bewegbar ist.

5. Linearmotorsystem (10) nach Anspruch 4,
wobei das Identifikationsmerkmal (38) am Sicherungselement (36) derart angeordnet ist, dass das Identifikationsmerkmal (38) durch den Sensor (40) zumindest im Wesentlichen nur für den Fall erkennbar ist, dass sich das Sicherungselement in der Sicherungsstellung befindet.

6. Linearmotorsystem (10) nach einem der Ansprüche 2 bis 5,
wobei sich das Sicherungselement (36) und die Sicherungsschiene (34) im Normalbetrieb nicht berühren.

7. Linearmotorsystem (10) nach einem der Ansprüche 2 bis 6,
wobei eine x-Richtung definiert ist, die einer von der Führung definierten Bewegungsrichtung entspricht, und/oder
wobei eine y-Richtung definiert ist, welche parallel zu der Magnetkraft (32) ist, mittels derer der Läufer (14) an der Führungsbahn (16) gehalten wird, und/oder
wobei eine z-Richtung definiert ist, welche senkrecht zu der Magnetkraft (32) und/oder senkrecht zu der von der Führung definierten Bewegungsrichtung ist;
wobei das Sicherungselement (36) und/oder die Sicherungsschiene zwischen einer Sicherungsstellung und einer Freigabestellung in einer xy-, yz- oder xz-Ebene bewegbar ist.

8. Linearmotorsystem (10) nach einem der Ansprüche 2 bis 7,
wobei das Sicherungselement (36) und/oder die Sicherungsschiene (34) zwischen einer Sicherungsstellung und einer Freigabestellung um eine Achse (42) drehbar oder entlang einer Achse (46, 48) verschiebbar ist, insbesondere wobei die Achse parallel zur x-, y,- oder z-Richtung ist.

9. Linearmotorsystem (10) nach Anspruch 7 oder 8,
wobei das Sicherungselement die Sicherungsschiene in y-Richtung und/oder in z-Richtung hintergreift.

10. Linearmotorsystem (10) nach einem der Ansprüche 2 bis 9,
wobei der Sensor (40) an der Führungsbahn (16), insbesondere an der Sicherungsschiene (34), vorgesehen ist.

11. Linearmotorsystem (10) nach einem der Ansprüche 2 bis 10,
wobei der Sensor (40) ein mechanischer, kapazitiver, induktiver, optischer, oder akustischer Sensor, ein Magnetsensor oder eine Signalempfangseinheit für ein elektromagnetisches und/oder optisches Signal ist.

12. Linearmotorsystem (10) nach einem der Ansprüche 2 bis 11,
wobei der Sensor (40) zur berührungslosen Erkennung des Identifikationsmerkmals (38) ausgebildet ist, und/oder
wobei an der Führungsbahn (16) ein einziger oder mehr als ein Sensor (40) zur Erkennung des Identifikationsmerkmals (38) vorgesehen ist.

13. Set von zumindest zwei Läufern (14) gemäß Anspruch 1, wobei die Identifikationsmerkmale (38) der verschiedenen Läufer (14) unterschiedlich sind.

14. Verfahren zum Betreiben eines Linearmotorsystems (10) nach wenigstens einem der Ansprüche 2 bis 12,
wobei der Läufer (14) anhand des Identifikationsmerkmals (38) identifiziert wird.

15. Verfahren nach Anspruch 14,
wobei das Linearmotorsystem (10) eine Mehrzahl an Läufern (14) jeweils mit einem Identifikationsmerkmal (38) umfasst,
wobei der Betrieb des Linearmotorsystems (10), insbesondere nach einer Betriebsunterbrechung, aufgenommen wird, wobei dies umfasst,
dass die Läufer (14) anhand ihrer Identifikationsmerkmale (38) identifiziert werden,
insbesondere wobei mittels einer Positionserfassungseinrichtung (28) Positionen ermittelt werden, an denen sich Läufer (14) befinden, wobei die Läufer (14) anschließend zwecks Identifizierung mittels eines Antriebs zu dem Sensor (40) bewegt werden und durch den Sensor (40) anhand ihrer Identifikationsmerkmale (38) identifiziert werden.

## Claims

1. A carrier (14) for a linear motor system (10), in particular a transport system, e.g. a multi-carrier:
wherein the carrier (14) comprises a magnet (22) for holding the carrier (14) by means of a magnetic force (32) at a guide track (16) and
a securing element (16) for securing the carrier (14) in the event of a failure or overcoming of the magnetic force (32),
**characterized in that**
an identification feature (38) for identifying the carrier (14) is provided at the securing element (36).

2. A linear motor system (10), in particular a transport system, e.g. a multi-carrier, comprising a carrier according to claim 1, said linear motor system (10) comprising:
at least the carrier (14),
a guide track (16) for the carrier (14),
a guide which guides the carrier (14) in a direction of movement along the guide track (16), wherein the carrier (14) is held at the guide track (16) by magnets (20), which are arranged along the guide track (16), by means of a magnetic force (32), and
a securing device which secures the carrier (14) at the guide track (16) in the event of a failure or overcoming of the magnetic force (32),
wherein the securing device has a securing rail (34) at the guide track (16) and the securing element (36) at the carrier (14),
wherein the linear motor system (10) has a sensor (40) for recognizing the identification feature (38).

3. A linear motor system (10) according to claim 2,
wherein the identification feature (38) encodes identification information, namely by at least one of the following:
physical form,
material,
surface property and/or surface design,
magnetization, and/or
electromagnetic and/or optical signal which the identification feature is configured to output.

4. A linear motor system (10) according to claim 2 or 3,
wherein the securing element (36) and/or the securing rail (34) can be moved between a securing position and a release position.

5. A linear motor system (10) according to claim 4,
wherein the identification feature (38) is arranged at the securing element (36) such that the identification feature (38) is recognizable by the sensor (40) at least substantially only in the event that the securing element is in the securing position.

6. A linear motor system (10) according to any one of the claims 2 to 5,
wherein the securing element (36) and the securing rail (34) do not touch during normal operation.

7. A linear motor system (10) according to any one of the claims 2 to 6, wherein an x direction is defined that corresponds to a direction of movement defined by the guide, and/or
wherein a y direction is defined that is parallel to the magnetic force (32) by means of which the carrier (14) is held at the guide track (16), and/or
wherein a z direction is defined that is perpendicular to the magnetic force (32) and/or perpendicular to the direction of movement defined by the guide;
wherein the securing element (36) and/or the securing rail can be moved between a securing position and a release position in an xy plane, yz plane or xz plane.

8. A linear motor system (10) according to any one of the claims 2 to 7,
wherein the securing element (36) and/or the securing rail (34) is/are rotatable about an axis (42) or displaceable along an axis (46, 48) between a securing position and a release position,
in particular wherein the axis is parallel to the x, y or z direction.

9. A linear motor system (10) according to claim 7 or 8,
wherein the securing element engages behind the securing rail in the y direction and/or in the z direction.

10. A linear motor system (10) according to any one of the claims 2 to 9,
wherein the sensor (40) is provided at the guide track (16), in particular at the securing rail (34).

11. A linear motor system (10) according to any one of the claims 2 to 10,
wherein the sensor (40) is a mechanical, capacitive, inductive, optical or acoustic sensor, a magnetic sensor or a signal reception unit for an electromagnetic and/or optical signal.

12. A linear motor system (10) according to any one of the claims 2 to 11,
wherein the sensor (40) is configured for a contactless recognition of the identification feature (38), and/or
wherein a single or more than one sensor (40) is provided at the guide track (16) for recognizing the identification feature (38).

13. A set of at least two carriers (14) according to claim 1, wherein the identification features (38) of the different carriers (14) are different.

14. A method of operating a linear motor system (10) according to at least one of the claims 2 to 12,
wherein the carrier (14) is identified based on the identification feature (38).

15. A method according to claim 14,
wherein the linear motor system (10) comprises a plurality of carriers (14), each having an identification feature (38),
wherein the operation of the linear motor system (10) is started, in particular after an operating interruption, wherein this comprises that the carriers (14) are identified based on their identification features (38),
in particular wherein positions at which carriers (14) are located are determined by means of a position detection device (28), wherein the carriers (14) are then moved to the sensor (40) by means of a drive for the purpose of identification and are identified by the sensor (40) based on their identification features (38).

## Revendications

1. Curseur (14) pour un système de moteur linéaire (10), en particulier un système de transport, par exemple un système multi-chariots,
dans lequel le curseur (14) comprend un aimant (22) pour maintenir le curseur (14) sur une voie de guidage (16) au moyen d'une force magnétique (32), et un élément de blocage (16) pour bloquer le curseur (14) en cas de défaillance ou de dépassement de la force magnétique (32),
**caractérisé en ce que**
une caractéristique d'identification (38) destinée à identifier le curseur (14) est prévue sur l'élément de blocage (36).

2. Système de moteur linéaire (10), en particulier système de transport, par exemple système multi-chariots, comprenant un curseur selon la revendication 1, comprenant :
au moins un curseur (14),
une voie de guidage (16) pour le curseur (14),
un guidage qui guide le curseur (14) dans une direction de déplacement le long de la voie de guidage (16), le curseur (14) étant maintenu sur la voie de guidage (16) au moyen d'une force magnétique (32) par des aimants (20) disposés le long de la voie de guidage (16), et
un dispositif de blocage qui bloque le curseur (14) sur la voie de guidage (16) en cas de défaillance ou de dépassement de la force magnétique (32), dans lequel
le dispositif de blocage comprend un rail de blocage (34) situé sur la voie de guidage (16) et l'élément de blocage (36) situé sur le curseur (14),
le système de moteur linéaire (10) comprend un capteur (40) pour détecter la caractéristique d'identification (38).

3. Système de moteur linéaire (10) selon la revendication 2,
dans lequel la caractéristique d'identification (38) code une information d'identification, à savoir par l'un au moins des éléments suivants :
la forme physique,
le matériau,
la propriété et/ou la configuration de surface,
la magnétisation, et/ou
un signal électromagnétique et/ou optique qui peut être émis par la caractéristique d'identification conçue à cet effet.

4. Système de moteur linéaire (10) selon la revendication 2 ou 3,
dans lequel l'élément de blocage (36) et/ou le rail de blocage (34) est mobile entre une position de blocage et une position de libération.

5. Système de moteur linéaire (10) selon la revendication 4,
dans lequel la caractéristique d'identification (38) est disposée sur l'élément de blocage (36) de telle sorte que la caractéristique d'identification (38) ne peut être détectée par le capteur (40), au moins sensiblement, que dans le cas où l'élément de blocage se trouve dans la position de blocage.

6. Système de moteur linéaire (10) selon l'une des revendications 2 à 5,
dans lequel l'élément de blocage (36) et le rail de blocage (34) ne se touchent pas en fonctionnement normal.

7. Système de moteur linéaire (10) selon l'une des revendications 2 à 6,
dans lequel une direction x est définie, qui correspond à une direction de déplacement définie par le guidage, et/ou
une direction y est définie, qui est parallèle à la force magnétique (32) au moyen de laquelle le curseur (14) est maintenu sur la voie de guidage (16), et/ou
une direction z est définie, qui est perpendiculaire à la force magnétique (32) et/ou perpendiculaire à la direction de déplacement définie par le guidage ;
l'élément de blocage (36) et/ou le rail de blocage est mobile entre une position de blocage et une position de libération dans un plan xy, yz ou xz.

8. Système de moteur linéaire (10) selon l'une des revendications 2 à 7,
dans lequel l'élément de blocage (36) et/ou le rail de blocage (34) peut tourner autour d'un axe (42) ou se déplacer le long d'un axe (46, 48) entre une position de blocage et une position de libération, en particulier l'axe étant parallèle à la direction x, y, ou z.

9. Système de moteur linéaire (10) selon la revendication 7 ou 8,
dans lequel l'élément de blocage engage par l'arrière le rail de blocage dans la direction y et/ou dans la direction z.

10. Système de moteur linéaire (10) selon l'une des revendications 2 à 9,
dans lequel le capteur (40) est prévu sur la voie de guidage (16), en particulier sur le rail de blocage (34).

11. Système de moteur linéaire (10) selon l'une des revendications 2 à 10, dans lequel le capteur (40) est un capteur mécanique, capacitif, inductif, optique ou acoustique, un capteur magnétique ou une unité de réception de signal pour un signal électromagnétique et/ou optique.

12. Système de moteur linéaire (10) selon l'une des revendications 2 à 11,
dans lequel le capteur (40) est conçu pour la détection sans contact physique de la caractéristique d'identification (38), et/ou
un seul ou plus d'un capteur (40) de détection de la caractéristique d'identification (38) est prévu sur la voie de guidage (16).

13. Ensemble d'au moins deux curseurs (14) selon la revendication 1,
dans lequel les caractéristiques d'identification (38) des différents curseurs (14) sont différentes.

14. Procédé de fonctionnement d'un système de moteur linéaire (10) selon l'une au moins des revendications 2 à 12,
dans lequel le curseur (14) est identifié à l'aide de la caractéristique d'identification (38).

15. Procédé selon la revendication 14,
dans lequel le système de moteur linéaire (10) comprend une pluralité de curseurs (14) ayant chacun une caractéristique d'identification (38),
le fonctionnement du système de moteur linéaire (10) est repris, en particulier après une interruption de fonctionnement, ce qui inclut que les curseurs (14) sont identifiés à l'aide de leurs caractéristiques d'identification (38),
en particulier, des positions auxquelles se trouvent des curseurs (14) sont déterminées au moyen d'un dispositif de détection de position (28), les curseurs (14) étant ensuite déplacés vers le capteur (40) au moyen d'un entraînement en vue de leur identification et étant identifiés par le capteur (40) à l'aide de leurs caractéristiques d'identification (38).
